# EUROPEAN PATENT SPECIFICATION

(11) **EP 4 137 909 B1**
(45) Date of publication and mention of the grant of the patent: **29.05.2024**
(21) Application number: 22183299.1
(22) Date of filing: 06.07.2022
(51) Int. Cl.: G05D 16/06

(54) **PRESSURE-REGULATING DEVICE**
DRUCKREGULIERENDE VORRICHTUNG
DISPOSITIF DE RÉGULATION DE PRESSION

(30) Priority: 16.08.2021 TW 110130063
(43) Date of publication of application: 22.02.2023
(73) Proprietor: Grand Mate Co., Ltd., Taichung City 401 (TW)
(72) Inventor: HUANG, Chung-Chin, 401 Taichung City (TW); HUANG, Chin-Ying, 401 Taichung City (TW); HUANG, Hsin-Ming, 401 Taichung City (TW); HUANG, Hsing-Hsiung, 401 Taichung City (TW); YEH, Yen-Jen, 412 Taichung City (TW)
(74) Representative: Viering, Jentschura & Partner mbB Patent- und Rechtsanwälte

(56) References cited:
- WO-A1-99/13945
- WO-A1-2015/150803
- WO-A1-2018/020267
- GB-A- 503 137

## Description

### BACKGROUND OF THE INVENTION

### Technical Field

The present invention relates generally to a gas tank, and more particularly to a pressure regulating device applying to a gas tank.

### Description of Related Art

In recent years, outdoor leisure activities such as camping or climbing in the wild have become popular for people to get away from the hustle and bustle. Cooking is often required for outdoor activities. Therefore, there are also many different outdoor gas stoves for people to choose from. Outdoor gas stoves use canned gas (usually the camping gas tank) to provide the required gas.

The camping gas tank is filled with high-pressure liquid gas. Generally, a needle valve is installed at an outlet of the camping gas tank and is connected to a burner of a gas stove via a gas pipe, wherein the needle valve is adapted to regulate an output amount of gas to output a small amount of high-pressure gas inside the camping gas tank.

However, if the needle valve is not working, the high-pressure gas inside the camping gas tank may be sprayed out in a large amount, causing a large amount of gas leakage, which may even be ignited.

Therefore, the way that the camping gas tank regulates the output amount of gas still has room for improvement.

WO2015150803A1 discloses piston regulators that are arranged to seal on the low-pressure side of a valve seat, WO2018020267A1 discloses an improved compressed fluid vessel for use in delivering gases, and WO1999013945A1 discloses a gas regulator device for use with a breathing apparatus.

### BRIEF SUMMARY OF THE INVENTION

In view of the above, the primary objective of the present invention is to provide a pressure regulating device, which could regulate a pressure of gas outputted by a portable gas tank.

According to the present invention, a pressure regulating device according to claim 1 is provided. Examples of such pressure regulating device are defined in dependent claims 2-13.

With the aforementioned design, the pressure stabilizer could reduce and regulate the pressure of the gas outputted by the portable gas tank, thereby stably output the output gas with the predetermined pressure. The switching assembly in the pressure stabilizer could control the output gas to open or close, which is convenient.

### BRIEF DESCRIPTION OF THE SEVERAL VIEWS OF THE DRAWINGS

The present invention will be best understood by referring to the following detailed description of some illustrative embodiments in conjunction with the accompanying drawings, in which
FIG. 1 is a perspective view of the pressure regulating device according to an embodiment of the present invention;
FIG. 2 is an exploded perspective view of the pressure regulating device according to the embodiment of the present invention;
FIG. 3 is another exploded perspective view of the pressure regulating device according to the embodiment of the present invention;
FIG. 4 is an exploded perspective view, showing the cover and the pressure stabilizer according to the embodiment of the present invention;
FIG. 5 is a perspective view of the pressure stabilizer according to the embodiment of the present invention;
FIG. 6 is an exploded perspective of the pressure stabilizer according to the embodiment of the present invention;
FIG. 7 is a front view of the pressure stabilizer according to the embodiment of the present invention;
FIG. 8 is another exploded perspective view of the pressure stabilizer according to the embodiment of the present invention;
FIG. 9 is a top view of the pressure stabilizer according to the embodiment of the present invention;
FIG. 10 is a sectional view along the 10-10 line in FIG. 9;
FIG. 11 is a sectional view along the 11-11 line in FIG. 9;
FIG. 12 is a sectional view along the 12-12 line in FIG. 5;
FIG. 13 is a perspective view of the manipulating member according to the embodiment of the present invention;
FIG. 14 is a sectional view along the 14-14 line in FIG. 13;
FIG. 15 is a sectional view along the 15-15 line in FIG. 1; and
FIG. 16 is a schematic view, showing the manipulating member drives the plug member to open the side opening.

### DETAILED DESCRIPTION OF THE INVENTION

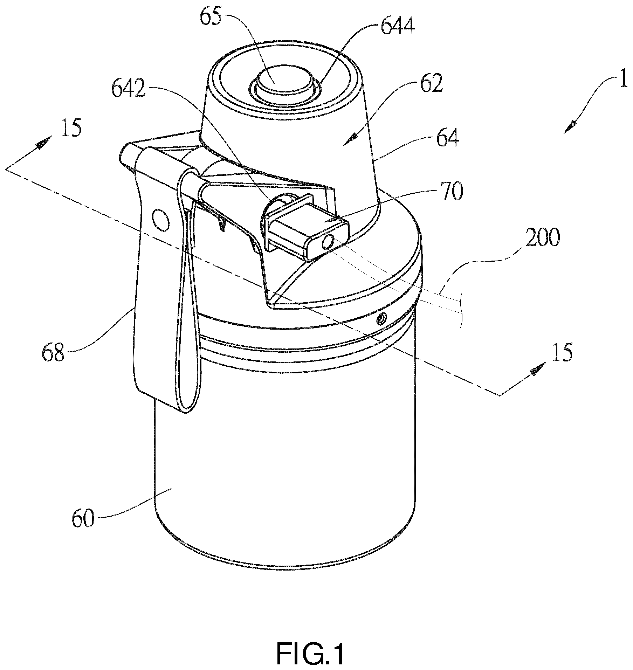

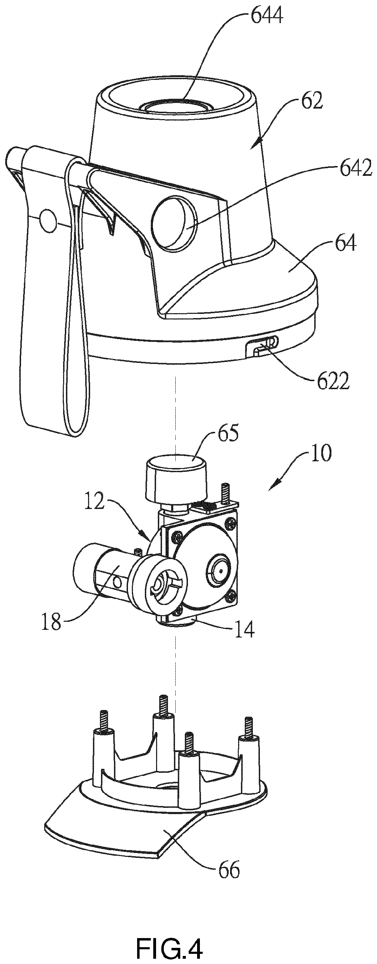

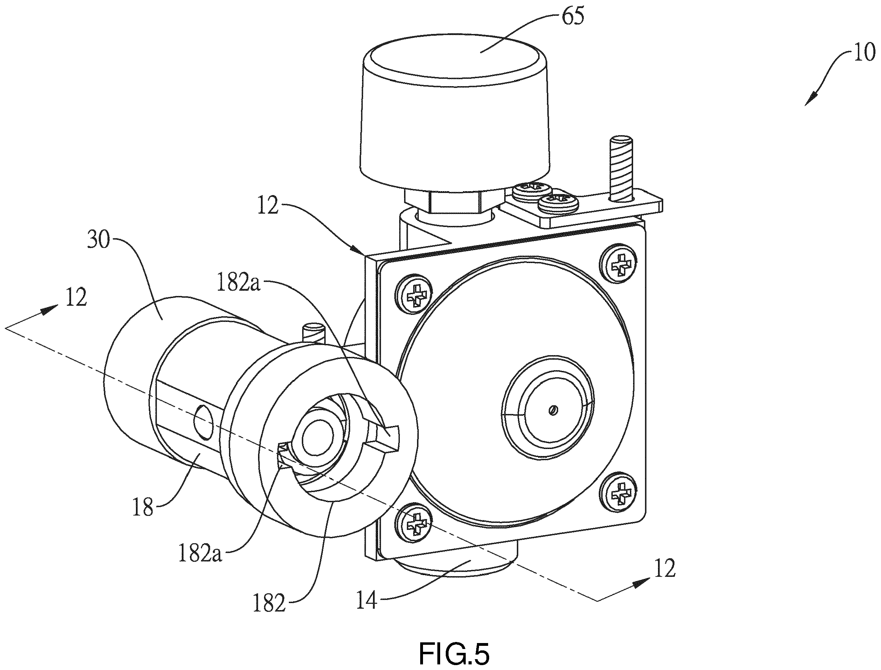

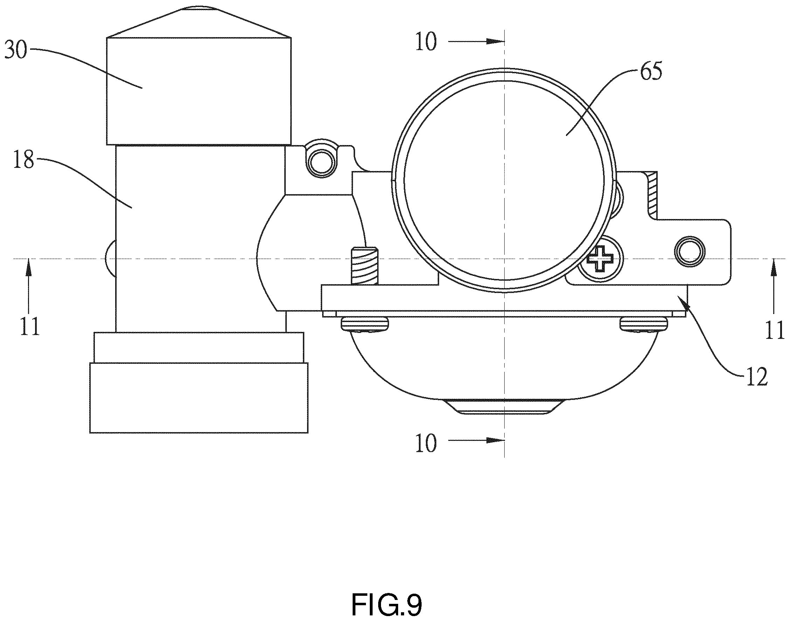

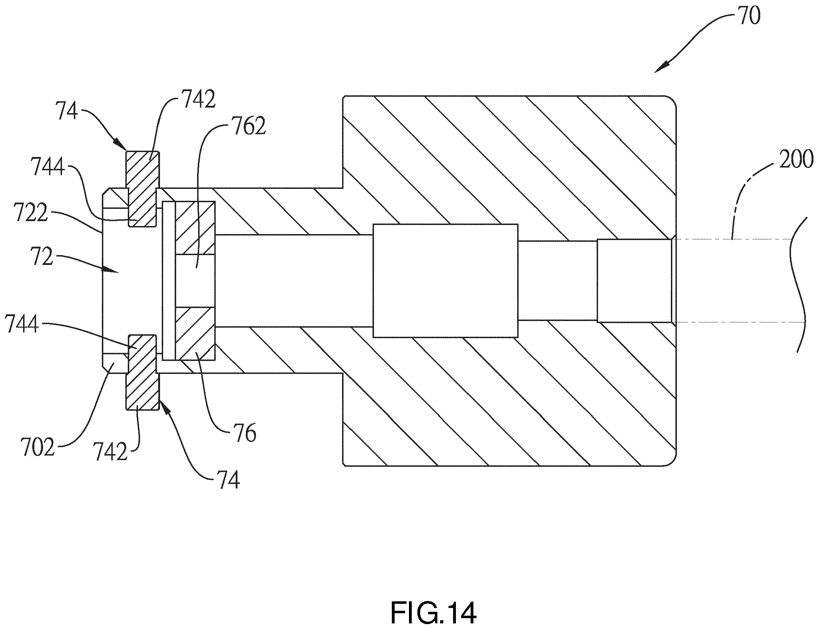

A pressure regulating device 1 according to an embodiment of the present invention is illustrated in FIG. 1 to FIG. 16 and at least includes a pressure stabilizer 10, wherein the pressure stabilizer 10 is connected to an outlet opening 100a of the portable gas tank 100. The portable gas tank 100 is a camping gas tank as an example and is filled with high-pressure liquid gas therein. The pressure stabilizer 10 is adapted to regulate a pressure of gas outputted by the portable gas tank 100.

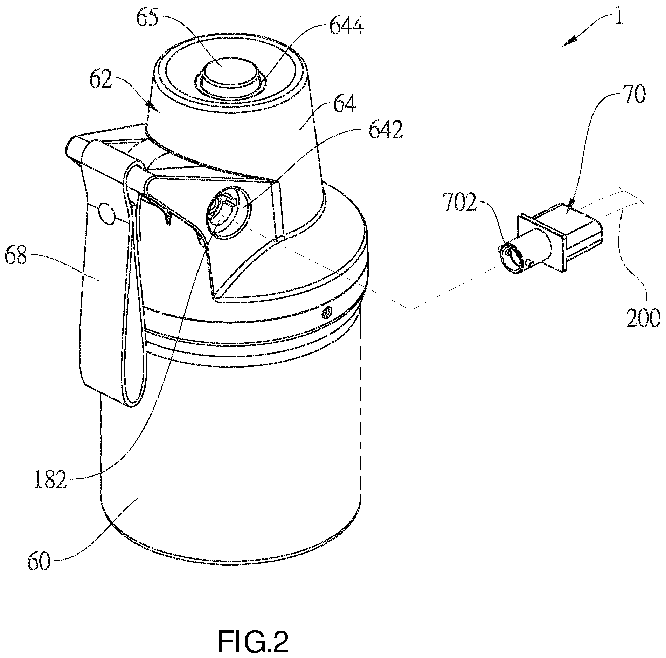

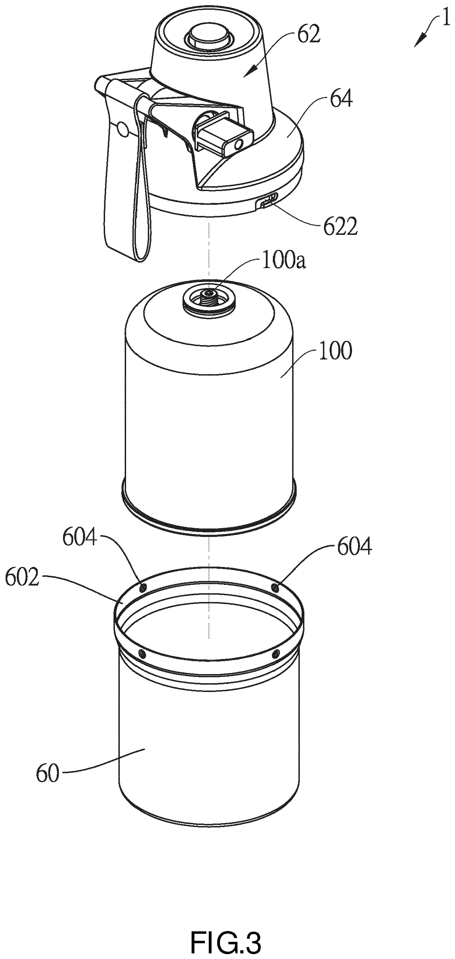

Referring to FIG. 2 and FIG. 3, in the current embodiment, the pressure regulating device 1 further includes a casing 60 and a cover 62, wherein the casing 60 has a top opening 602 and is adapted to receive the portable gas tank 100, and a top portion of the portable gas tank 100 is located at the top opening 602. An inner wall of the casing 60 has a plurality of protrusions 604 located around the top opening 602.

The cover 62 is detachably engaged with the casing 60 and seals the top opening 602. In the current embodiment, a plurality of slots is disposed on an outer peripheral surface of a bottom portion of the cover 62, and the protrusions 604 of the casing 60 are engaged with the slots 622 respectively, thereby engaging the cover 62 and the casing 60. The cover 62 includes a cover body 64 and a bottom plate 66, wherein a receiving space is formed between the cover body 64 and the bottom plate 66. The cover body 64 has a first opening 642 and a second opening 644, wherein the first opening 642 is located at a side portion of the cover body 64, and the second opening 644 is located at a top portion of the cover body 64. The first opening 642 and the second opening 644 respectively communicate with the receiving space. A hanging member 68 could be selectively disposed on the cover 62 for the user to lift or suspend the pressure regulating device 1.

The pressure stabilizer 10 is disposed in the receiving space of the cover 62 and includes a valve body 12, a pressure regulating assembly 32, and a switching assembly 42, wherein the valve body 12 has an inlet portion 14, a decompression chamber 16, and an outlet portion 18.

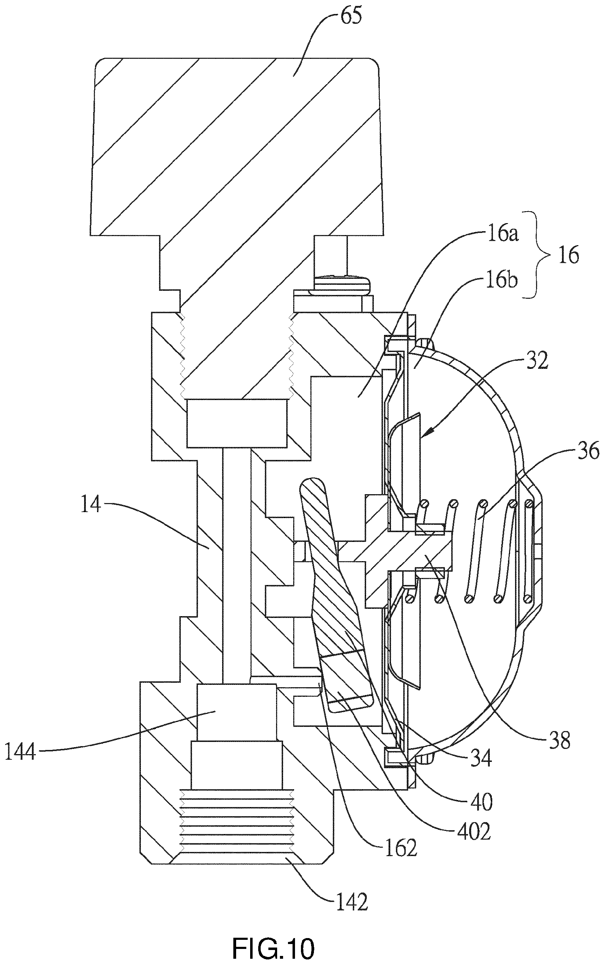

An end of the inlet portion 14 has an inlet port 142 which is adapted to be connected to the outlet opening 100a of the portable gas tank 100, wherein an inner wall of the inlet port 142 has an internal threaded section which is adapted to be screwed with an outer threaded section around the outlet opening 100a of the portable gas tank 100. As shown in FIG. 10, the inlet portion 14 has an inlet passage 144 extending along an axial direction of the inlet portion 14, and an end of the inlet passage 144 communicates with the inlet port 142.

In the current embodiment, a pressure gauge 65 is disposed on a top portion of the inlet portion 14, and another end of the inlet passage 144 extends to the top portion of the inlet portion 14. The pressure gauge 65 communicates with the another end of the inlet passage 144 for measuring a pressure in the inlet passage 144 (i.e., the pressure gauge 65 could detect a pressure of a gas of the portable gas tank 100. The pressure gauge 65 is located in the second opening 644 of the cover 62 for the user to observe a pressure indicated by the pressure gauge 65. In practice, the pressure gauge 65 could be a pressure gauge of pointer type or digital type.

The decompression chamber 16 is located at a side of the inlet portion 14, and has a valve opening 162 therein (as shown in FIG. 10), wherein the decompression chamber 16 communicates with the inlet passage 144 of the inlet portion 14 via the valve opening 162.

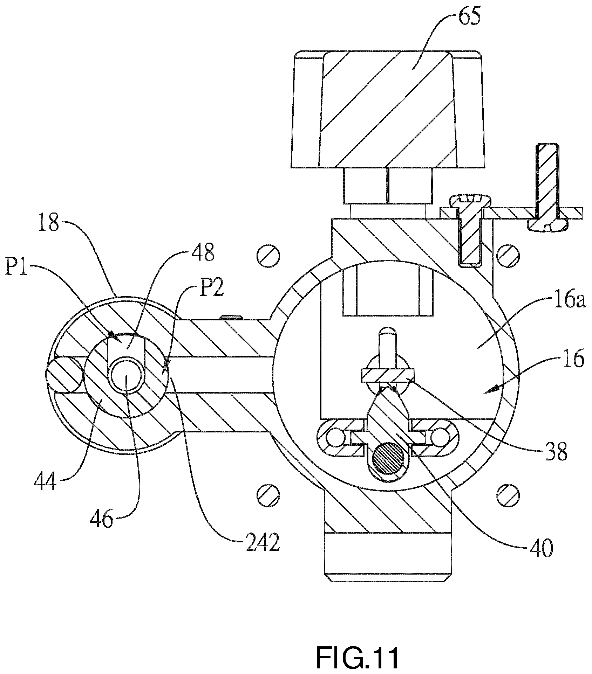

Referring to FIG. 10 and FIG. 11, the pressure regulating assembly 32 is disposed in the decompression chamber 16 for regulating the pressure of gas outputted by the portable gas tank 100, thereby reducing the pressure of gas and stabilize the output gas with a predetermined pressure. In the current embodiment, the predetermined pressure is 280 mm/H2O as an example. In the current embodiment, the pressure regulating assembly 32 includes a film 34, a spring 36, a movable member 38, and a covering member 40, wherein the film 34 divides the decompression chamber 16 into a first sub-chamber 16a and a second sub-chamber 16b. The first sub-chamber 16a communicates with the inlet passage 144 via the valve opening 162 and communicates with the outlet portion 18. The spring 36 is located in the second sub-chamber 16b and abuts against the valve body 12 and the film 34. The movable member 38 is connected to the film 34. The covering member 40 is pivotally connected to the valve body 12 and is connected to the movable member 38 and has a cover portion 402 located at a position corresponding to the valve opening 162. In this way, when the pressure of the gas inside the portable gas tank 100 is sufficient to push the film 34 toward the spring 36 to drive the cover portion 402 of the covering member 40 to open the valve opening 162 in a small extent to reduce a pressure of the first sub-chamber 16a to form the output gas with the predetermined pressure. As the pressure of gas in the portable gas tank 100 decreases, the pressure of the first sub-chamber 16a decreases, so that the spring 36 pushes the film 34 toward the valve opening 162, driving the cover portion 402 of the covering member 40 gradually moves away from the valve opening 162 to increase an opening extent of the valve opening 162, thereby the pressure in the first sub-chamber 16a could be maintained at the stable predetermined pressure.

The outlet portion 18 is located at a side of the decompression chamber 16 and communicates with the first sub-chamber 16a of the decompression chamber 16. The outlet portion 18 has an outlet port 182, wherein a location of the outlet port 182 corresponds to the first opening 642 of the cover 62.

The switching assembly 42 is disposed in the outlet portion 18 and is located between the decompression chamber 16 and the outlet port 182, wherein the switching assembly 42 is manipulable to block or open the output gas.

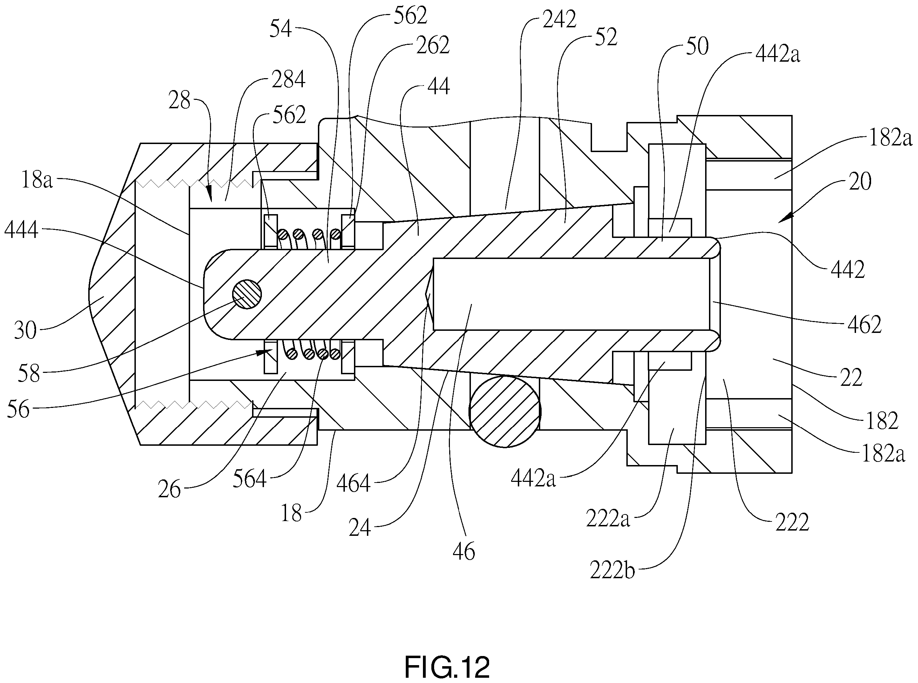

More specifically, referring to FIG. 11 and FIG. 12, the outlet portion 18 has a receiving hole 20, wherein the receiving hole 20 has a first section 22, a second section 24, and a third section 26 connected in sequence along an axial direction thereof. The outlet port 182 is located at the first section 22. The first section 22 has a connecting passage 222. The second section 24 is located between the first section 22 and the third section 26 and forms a receiving chamber, wherein a hole wall of the second section 24 is tapered in shape. More specifically, a diameter of the second section 24 gradually decreases in a direction from the first section 22 to the third section 26. The hole wall of the second section 24 has a side opening 242 communicating with the decompression chamber 16. A junction between the third section 26 and the second section 24 has a shoulder portion 262. An inner wall of the connecting passage 222 (i.e., a hole wall of the first section 22) has an annular groove 222a. An end portion of the outlet port 182 has at least one recess 182a. In the current embodiment, a number of the at least one recess 182a is two, and the two recesses 182a communicate with the annular groove 222a. The annular groove 222a has a groove wall 222b facing the second section 24.

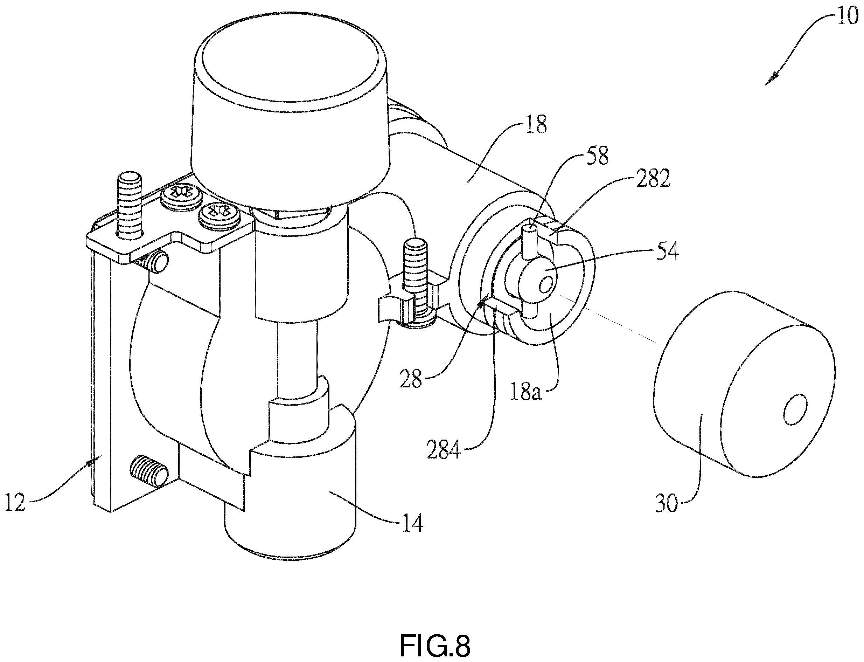

Additionally, the outlet portion 18 has a restricting groove 28 located at a radial periphery of the third section 26 and communicating with the third section 26. Two end walls of the restricting groove 28 respectively form a first blocking portion 282 and a second blocking portion 284 (as shown in FIG. 8). In the current embodiment, the outlet portion 18 has an open end 18a at an outer side of the third section 26, and a rear cover 30 is engaged around a radial periphery of the third section 26 in a threaded way to close the open end 18a.

The switching assembly 42 includes a plug member 44, wherein the plug member 44 has a first end 442 and a second end 444 opposite to the first end 442 in an axial direction thereof. At least a part of the plug member 44 is located in the second section 24 of the receiving hole 20. The plug member 44 has an axial hole 46 and a through hole 48 located in a radial direction of the plug member 44, wherein the axial hole 46 communicates with the through hole 48 and the outlet port 182. More specifically, the plug member 44 includes a driving section 50, a tapered section 52, and an extending section 54, wherein the driving section 50 has the first end 442, and the tapered section 52 is located between the driving section 50 and the extending section 54, and the driving section 50 is located at the first section 22. The tapered section 52 is located at the second section 24, wherein an outer peripheral surface of the tapered section 52 matches with the hole wall of the second section 24. The extending section 54 is located at the third section 26 and has the second end 444.

The axial hole 46 has an open side 462 and a close side 464, wherein the open side 462 is formed at the first end 442, and the close side 464 is located at the tapered section 52 and is located between the first end 442 and the second end 444. The through hole 48 is located on the tapered section 52.

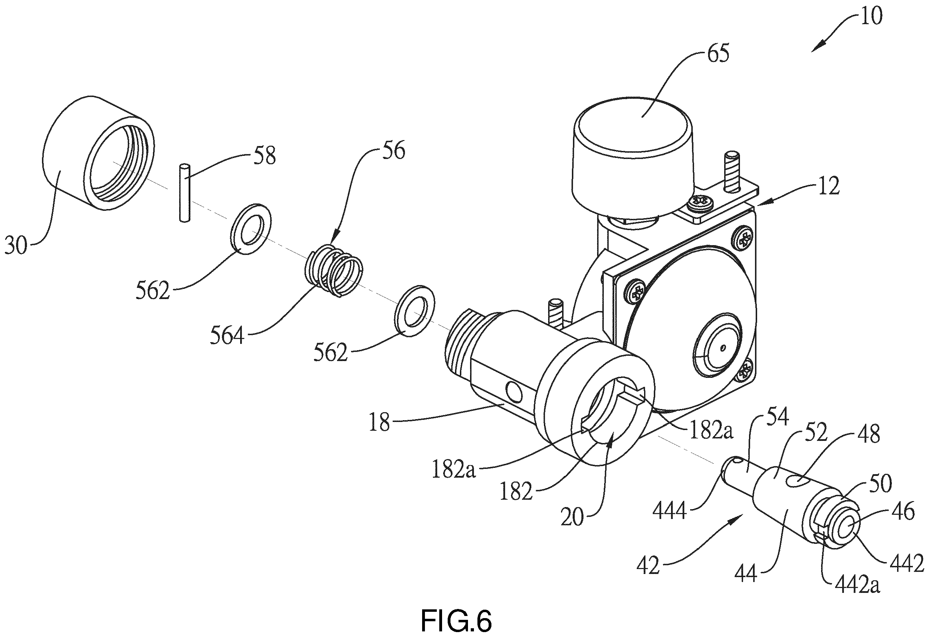

The first end 442 has at least one notch 442a. In the current embodiment, referring to FIG. 6, a number of the at least one notch 442a is two, wherein the two notches 442a are located at two opposite sides of a radial periphery of the axial hole 46. The annular groove 222a of the outlet port 182 surrounds a radial periphery of the two notches 442a.

The switching assembly 42 further includes an elastic member 56, wherein an end of the elastic member 56 abuts against the shoulder portion 262, while another end of the elastic member 56 exerts a force on the extending section 54 in a direction away from the shoulder portion 262, so that the outer peripheral surface of the tapered section 52 could tightly abut against the hole wall of the second section 24. In the current embodiment, the switching assembly 42 includes a blocking member which is a blocking rod 58 as an example, wherein the blocking rod 58 is disposed at the extending section 54 of the plug member 44 and extends in a radial periphery of the extending section 54. Another end of the elastic member 56 abuts against the blocking rod 58. The elastic member 56 includes a spring 564 and two blocking plates 562 fitting around the extending section 54, wherein the spring 564 is located between the two blocking plates 562. One of the blocking plates 562 forms an end of the elastic member 56 and abuts against the shoulder portion 262, while the other blocking plate 562 forms another end of the elastic member 56 and abuts against the blocking rod 58. An end of the blocking rod 58 extends into the restricting groove 28 and is located between the first blocking portion 282 and the second blocking portion 284 for restricting a rotation angle of the plug member 44.

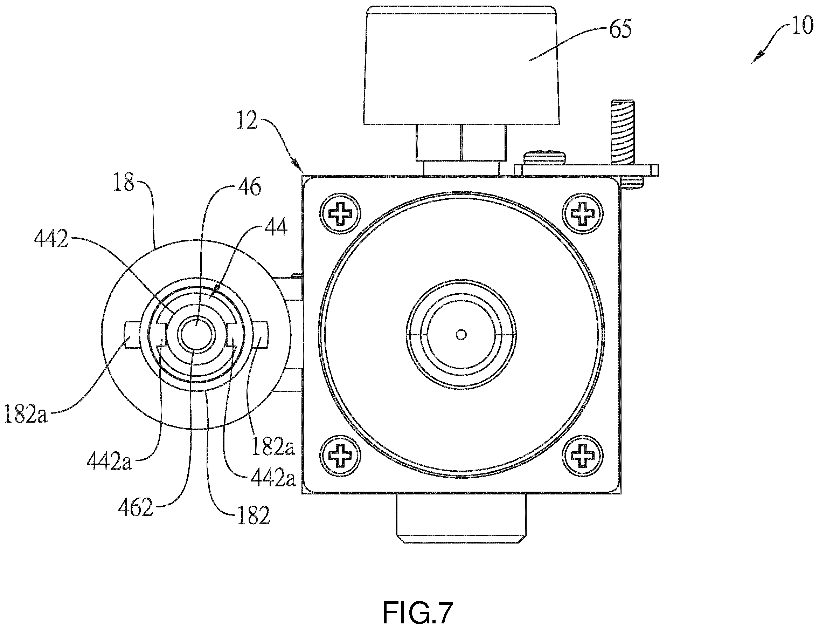

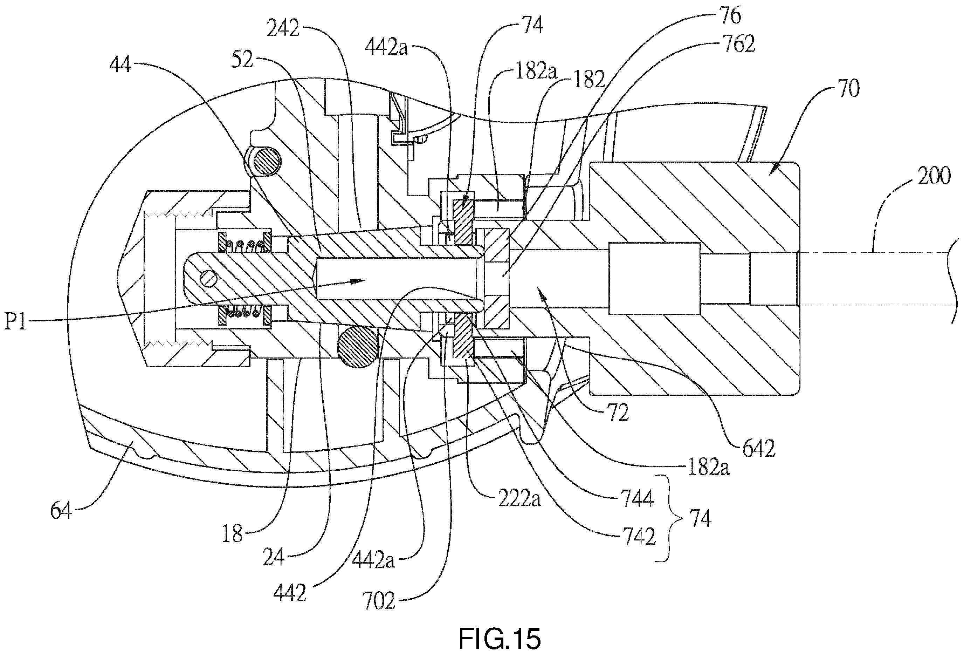

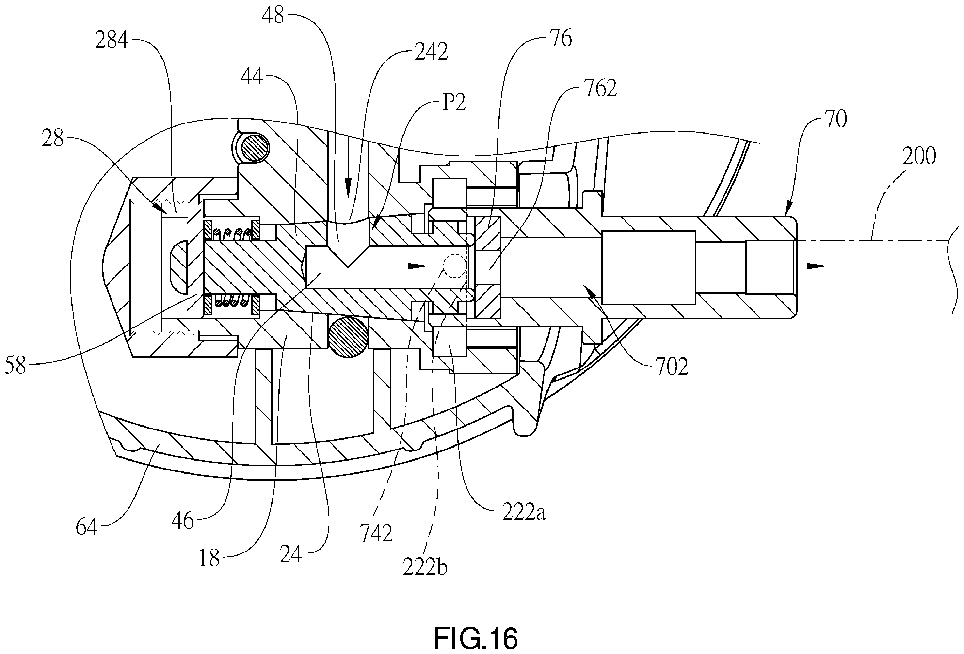

Referring to FIG. 11, FIG. 15, and FIG. 16, the plug member 44 is manipulable to turn in the axial direction of the plug member 44 between a first position P1 and a second position P2. Referring to FIG. 15, when the plug member 44 is at the first position P1, the outer peripheral surface of the tapered section 52 of the plug member 44 closes the side opening 242 to block the output gas, and the notches 442a on the first end 442 of the plug member 44 and the recess 182a of the outlet port 182 are located at the same reference plane (as shown in FIG. 7), and the blocking rod 58 abuts against the first blocking portion 282. Referring to FIG. 16, when the plug member 44 is at the second position P2, the blocking rod 58 abuts against the second blocking portion 284, and the through hole 48 communicates with the side opening 242 to open the output gas, allowing the output gas being outputted through the outlet port 182.

To easily manipulate the plug member 44, in the current embodiment, the pressure regulating device 1 further includes a manipulating member 70, wherein the manipulating member 70 has a connecting end 702 and has a gas passage 72 therein. An end of the gas passage 72 forms an inlet 722 at the connecting end 702, while another end of the gas passage 72 is adapted to communicate with a gas pipe 200, wherein the gas pipe 200 could be a hose and be connected to a gas apparatus. The manipulating member 70 is detachably connected to the outlet port 182 via the connecting end 702, and the connecting end 702 is connected to the plug member 44, and the gas passage 72 communicates with the axial hole 46. The manipulating member 70 drives the plug member 44 to turn between the first position P1 and the second position P2.

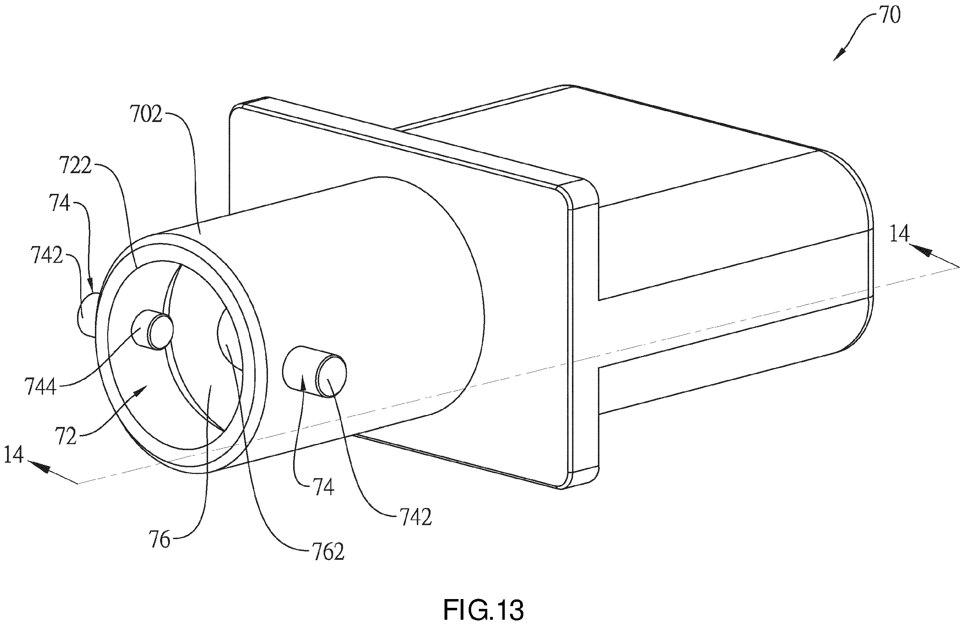

More specifically, referring to FIG. 13 to FIG. 16, the connecting end 702 of the manipulating member 70 is configured with at least one positioning member 74. In the current embodiment, a number of the at least one positioning member 74 is two. When the plug member 44 is located at the first position P1, each of the positioning members 74 could enter the annular groove 222a via one of the recesses 182a of the outlet port 182, and could further enter one of the notches 442a of the plug member 44.

In the current embodiment, the positioning members 74 are disposed in a radial direction of the connecting end 702, wherein each of the positioning members 74 has an outer end 742 protruding out of a radial periphery of the connecting end 702 and an inner end 744 located in the gas passage 72. A sealing member 76 is disposed in the gas passage 72 and has a through hole 762 communicating with the gas passage 72.

When the plug member 44 is located at the first position P1 and the connecting end 702 is connected to the plug member 44, the outer end 742 of each of the positioning members 74 enters the annular groove 222a via one of the recesses 182a, and the inner end 744 of each of the positioning members 74 enters one of the notches 442a. The first end 442 of the plug member 44 is located in the gas passage 72 and abuts against the sealing member 76. The open side 462 of the axial hole 46 communicates with the through hole 762 and the gas passage 72. When the user turns the manipulating member 70, the inner end 744 of each of the positioning members 74 abuts against a wall of each of the notches 442a to drive the plug member 44 to turn to the second position P2 in the axial direction thereof. During the turn, when the outer end 742 of each positioning member 74 leaves a projection range of one of the recesses 182a, the groove wall 222b of the annular groove 222a restricts the outer end 742 of each positioning member 74 to the annular groove 222a (as shown at the dotted line in FIG. 16). In this way, when the plug member 44 turns from the first position P1 to the second position P2, the annular groove 222a restricts the manipulating member 70 from disengaging, and the first end 442 of the plug member 44 stably abuts against the sealing member 76, thereby the output gas outputted from the axial hole 46 of the plug member 44 could enter the gas passage 72 of the manipulating member 70 to be transmitted to the gas pipe 200.

When the user does not use gas, the manipulating member 70 could be turned in a reverse direction, and the plug member 44 could be turned back to the first position P1, so that the plug member 44 could block the gas, and the manipulating member 70 could be removed from the outlet port 182 of the valve body 12, so that the user could freely move the pressure regulating device 1 and the portable gas tank 100.

With the aforementioned design, when the pressure stabilizer 10 of the present invention is connected to the portable gas tank 100, the pressure of the gas outputted by the portable gas tank 100 could be reduced and regulated, thereby to stably output the output gas with the predetermined pressure. The switching assembly 42 in the pressure stabilizer 10 could control the output gas to open or close, which is convenient. It is worth mentioning that, it is more convenient to use the output gas by using the manipulating member 70 to turn the plug member 44 to allow the output gas to be transmitted to the gas pipe 200 via the gas passage 72 in the manipulating member 70. In addition, since the plug member 44 is in the valve body 12, the plug member 44 would not be touched by mistake to lead to a problem that the output gas leaks from the outlet port 182. Moreover, the cover 62 and the casing 60 could prevent the pressure stabilizer 10 and the portable gas tank 100 from collision.

In an embodiment, the cover 62 and the casing 60 could be omitted, and the pressure stabilizer 10 is directly connected to the portable gas tank 100.

In an embodiment, the gas pipe 200 could be fixed to the outlet port 182 of the outlet portion 18, and by configuring a manipulating member (e.g. a button) on the extending section 54 of the plug member 44, the manipulating member could drive the plug member 44 to turn between the first position P1 and the second position P2.

## Claims

1. A pressure regulating device (1), which is adapted to be connected to an outlet opening (100a) of a portable gas tank (100), comprising:
a pressure stabilizer (10) comprising a valve body (12), a pressure regulating assembly (32), and a switching assembly (42), wherein the valve body (12) has an inlet portion (14), a decompression chamber (16), and an outlet portion (18); the inlet portion (14) has an inlet port (142) adapted to be connected to the outlet opening (100a) of the portable gas tank (100); the decompression chamber (16) communicates with the inlet portion (14); the outlet portion (18) communicates with the decompression chamber (16); the outlet portion (18) has an outlet port (182); the pressure regulating assembly (32) is disposed in the decompression chamber (16) and is adapted to regulate a pressure of a gas outputted by the portable gas tank (100) to form an output gas with a predetermined pressure; the switching assembly (42) is disposed in the outlet portion (18), and is located between the decompression chamber (16) and the outlet port (182), and is manipulable to block or open the output gas,
**characterized in that** the outlet portion (18) has a receiving chamber; a wall of the receiving chamber has a side opening (242) communicating with the decompression chamber (16); the switching assembly (42) comprises a plug member (44) located in the receiving chamber; the plug member (44) has a through hole (48) located at a radial direction of the plug member (44) and an axial hole (46) communicating with the through hole (48) and the outlet port (182); the plug member (44) is turnable between a first position (P 1) and a second position (P2) in an axial direction of the plug member (44); when the plug member (44) is at the first position (P1), an outer peripheral surface of the plug member (44) closes the side opening (242); when the plug member (44) is at the second position (P2), the through hole (48) communicates with the side opening (242); a manipulating member (70) has a connecting end (702) and has a gas passage (72) therein; an end of the gas passage (72) forms an inlet (722) at the connecting end (702), and another end of the gas passage (72) is adapted to communicate with a gas pipe (200); the manipulating member (70) is detachably connected to the outlet port (182) via the connecting end (702); the connecting end (702) is connected to the plug member (44), and the gas passage (72) communicates with the axial hole (46); the manipulating member (70) drives the plug member (44) to turn between the first position (P1) and the second position (P2).

2. The pressure regulating device (1) as claimed in claim 1, further comprising a casing (60) and a cover (62), wherein the casing (60) is adapted to receive the portable gas tank (100) and has a top opening (602); the cover (62) is detachably engaged with the casing (60) and closes the top opening (602), and has a receiving space and a first opening (642) communicating with the receiving space; the pressure stabilizer (10) is disposed in the receiving space of the cover (62); a location of the outlet port (182) corresponds to the first opening (642).

3. The pressure regulating device (1) as claimed in claim 2, further comprising a hanging member (68) connected to the cover (62).

4. The pressure regulating device (1) as claimed in claim 2, wherein the inlet portion (14) has an inlet passage (144) extending in an axial direction of the inlet portion (14); an end of the inlet passage (144) communicates with the inlet port (142); a pressure gauge (65) is engaged with the inlet portion (14) of the valve body (12) and communicates with another end of the inlet passage (144); the cover (62) has a second opening (644) communicating with the receiving space, and the pressure gauge (65) is located in the second opening (644).

5. The pressure regulating device (1) as claimed in claim 1, wherein at least one positioning member (74) is disposed on the connecting end (702) of the manipulating member (70); the outlet port (182) of the valve body (12) has a connecting passage (222); an inner wall of the connecting passage (222) has an annular groove (222a); an end portion of the outlet port (182) has at least one recess (182a) communicating with the annular groove (222a); the at least one positioning member (74) enters the annular groove (222a) via the at least one recess (182a).

6. The pressure regulating device (1) as claimed in claim 5, wherein the plug member (44) has a first end (442) and a second end (444) opposite to the first end (442) in an axial direction of the plug member (44); the axial hole (46) has an open side (462) formed at the first end (442) and a close side (464) located between the first end (442) and the second end (444); the first end (442) has at least one notch (442a); the annular groove (222a) surrounds a radial periphery of the at least one notch (442a); when the plug member (44) is located at the first position (P1), the at least one positioning member (74) enters the at least one notch (442a) via the at least one recess (182a) and is adapted to drive the plug member (44) to turn to the second position (P2) along the axial direction of the plug member (44).

7. The pressure regulating device (1) as claimed in claim 6, wherein the at least one positioning member (74) is arranged in a radial direction of the connecting end (702) and has an outer end (742) protruding out of a radial periphery of the connecting end (702) and an inner end (744) located in the gas passage (72); when the connecting end (702) is connected to the plug member (44), the first end (442) of the plug member (44) is located in the gas passage (72), and the inner end (744) of the at least one positioning member (74) enters the at least one notch (442a), and the outer end (742) of the at least one positioning member (74) enters the annular groove (222a).

8. The pressure regulating device (1) as claimed in claim 7, wherein a sealing member (76) is disposed in the gas passage (72) and has a through hole (762) communicating with the gas passage (72); when the connecting end (702) is connected to the plug member (44), the first end (442) of the plug member (44) abuts against the sealing member (76), and the open side (462) of the axial hole (46) communicates with the through hole (762).

9. The pressure regulating device (1) as claimed in claim 6, wherein when the at least one positioning member (74) drives the plug member (44) to turn to the second position (P2) along the axial direction of the plug member (44), a groove wall (222b) of the annular groove (222a) restricts the at least one positioning member (74) in the annular groove (222a).

10. The pressure regulating device (1) as claimed in claim 5, wherein the outlet portion (18) has a receiving hole (20); the receiving hole (20) has a first section (22), a second section (24), and a third section (26); the first section (22) has the connecting passage (222); the second section (24) is located between the first section (22) and the third section (26); a hole wall of the second section (24) is tapered in shape and forms the receiving chamber, and a diameter of the second section (24) gradually decreases in a direction from the first section (22) to the third section (26); a junction between the third section (26) and the second section (24) has a shoulder portion (262); the plug member (44) comprises a tapered section (52) and an extending section (54); an outer peripheral surface of the tapered section (52) matches with the hole wall of the second section (24); the through hole (48) is located on the tapered section (52); the extending section (54) is connected to the tapered section (52) and is located at the third section (26) of the receiving hole (20); the switching assembly (42) comprises an elastic member (56); an end of the elastic member (56) abuts against the shoulder portion (262), while another end of the elastic member (56) exerts a force on the extending section (54) in a direction way from the shoulder portion (262), so that the outer peripheral surface of the tapered section (52) abuts against the hole wall of the second section (24).

11. The pressure regulating device (1) as claimed in claim 10, wherein the switching assembly (42) comprises a blocking member disposed at the extending section (54) of the plug member (44); the another end of the elastic member (56) abuts against the blocking member.

12. The pressure regulating device (1) as claimed in claim 11, wherein the elastic member (56) comprises two blocking plates (562) and a spring (564); the two blocking plates (562) fits around the extending section (54), and one of the blocking plates (562) abuts against the shoulder portion (262), while the other blocking plate (562) abuts against the blocking member; the spring (564) fits around the extending section (54) and is located between the two blocking plates (562).

13. The pressure regulating device (1) as claimed in claim 11, wherein the outlet portion (18) of the valve body (12) has a restricting groove (28) communicating with the third section (26) of the receiving hole (20); the restricting groove (28) has a first blocking portion (282) and a second blocking portion (284); the blocking member enters the restricting groove (28); when the plug member (44) is turned to the first position (P1), the blocking member abuts against the first blocking portion (282); when the plug member (44) is turned to the second position (P2), the blocking member abuts against the second blocking portion (284).

## Patentansprüche

1. Druckregulierungsvorrichtung (1), welche angepasst ist, um mit einer Auslassöffnung (100a) eines tragbaren Gasbehälters (100) verbunden zu sein, aufweisend:
eine Druckstabilisationsvorrichtung (10), welche einen Ventilkörper (12), eine Druckregulierungsbaugruppe (32) und eine Schaltbaugruppe (42) aufweist, wobei der Ventilkörper (12) einen Einlassabschnitt (14), eine Dekompressionskammer (16) und einen Auslassabschnitt (18) aufweist; wobei der Einlassabschnitt (14) einen Einlassanschluss (142) hat, welcher angepasst ist, um mit der Auslassöffnung (100a) des tragbaren Gasbehälters (100) verbunden zu sein; wobei die Dekompressionskammer (16) mit dem Einlassabschnitt (14) in Verbindung steht; wobei der Auslassabschnitt (18) mit der Dekompressionskammer (16) in Verbindung steht; wobei der Auslassabschnitt (18) einen Auslassanschluss (182) hat; wobei die Druckregulierungsbaugruppe (32) in der Dekompressionskammer (16) angeordnet ist und angepasst ist, um einen Druck eines Gases zu regulieren, welches mittels des tragbaren Gasbehälters (100) ausgegeben wird, um ein Abgabegas mit einem vorbestimmten Druck zu bilden; wobei die Schaltbaugruppe (42) in dem Auslassabschnitt (18) angeordnet ist, und sich zwischen der Dekompressionskammer (16) und dem Auslassanschluss (182) befindet, und betätigbar ist, um das Ausgabegas zu blockieren oder freizugeben,
**dadurch gekennzeichnet, dass** der Auslassabschnitt (18) eine Aufnahmekammer hat; wobei eine Wand der Aufnahmekammer eine Seitenöffnung (242) hat, welche mit der Dekompressionskammer (16) in Verbindung steht; wobei die Schaltbaugruppe (42) ein Stöpselelement (44) aufweist, welches sich in der Aufnahmekammer befindet; wobei das Stöpselelement (44) ein Durchgangsloch (48), welches sich in einer radialen Richtung des Stöpselelements (44) befindet, und ein axiales Loch (46) hat, welches mit dem Durchgangsloch (48) und dem Auslassanschluss (182) in Verbindung steht; wobei das Stöpselelement (44) zwischen einer ersten Position (P1) und einer zweiten Position (P2) in einer axialen Richtung des Stöpselelements (44) drehbar ist; wobei, wenn sich das Stöpselelement (44) an der ersten Position (P1) befindet, eine Außenumfangsfläche des Stöpselelements (44) die Seitenöffnung (242) verschließt; wobei, wenn sich das Stöpselelement (44) an der zweiten Position (P2) befindet, das Durchgangsloch (48) mit der Seitenöffnung (242) in Verbindung steht; wobei ein Betätigungselement (70) ein Verbindungsende (702) hat und darin einen Gasdurchgang (72) hat; wobei ein Ende des Gasdurchgangs (72) einen Einlass (722) an dem Verbindungsende (702) bildet, und ein anderes Ende des Gasdurchgangs (72) angepasst ist, um mit einer Gasleitung (200) zu kommunizieren; wobei das Betätigungselement (70) über das Verbindungsende (702) abnehmbar mit dem Auslassanschluss (182) verbunden ist; wobei das Verbindungsende (702) mit dem Stöpselelement (44) verbunden ist, und der Gasdurchgang (72) mit dem axialen Loch (46) in Verbindung steht; wobei das Betätigungselement (70) das Stöpselelement (44) dazu antreibt, sich zwischen der ersten Position (P1) und der zweiten Position (P2) zu drehen.

2. Druckregulierungsvorrichtung (1) gemäß Anspruch 1, welche ferner ein Gehäuse (60) und einen Deckel (62) aufweist, wobei das Gehäuse (60) angepasst ist, um den tragbaren Gasbehälter (100) aufzunehmen, und eine obere Öffnung (602) hat; wobei der Deckel (62) abnehmbar mit dem Gehäuse (60) in Eingriff steht und die obere Öffnung (602) verschließt, und einen Aufnahmeraum und eine erste Öffnung (642) hat, welche mit dem Aufnahmeraum in Verbindung steht; wobei die Druckstabilisationsvorrichtung (10) in dem Aufnahmeraum des Deckels (62) angeordnet ist; wobei eine Anordnung des Auslassanschlusses (182) mit der ersten Öffnung (642) korrespondiert.

3. Druckregulierungsvorrichtung (1) gemäß Anspruch 2, welche ferner eine Aufhängelement (68) aufweist, welches mit dem Deckel (62) verbunden ist.

4. Druckregulierungsvorrichtung (1) gemäß Anspruch 2, wobei der Einlassabschnitt (14) einen Einlassdurchgang (144) aufweist, welcher sich in einer axialen Richtung des Einlassabschnitts (14) erstreckt; wobei ein Ende des Einlassdurchgangs (144) mit dem Einlassanschluss (142) in Verbindung steht; wobei eine Druckmessvorrichtung (65) mit dem Einlassabschnitt (14) des Ventilkörpers (12) in Eingriff steht und mit einem anderen Ende des Einlassdurchgangs (144) in Verbindung steht; wobei der Deckel (62) eine zweite Öffnung (644) hat, welche mit dem Aufnahmeraum in Verbindung steht, und sich die Druckmessvorrichtung (65) in der zweiten Öffnung (644) befindet.

5. Druckregulierungsvorrichtung (1) gemäß Anspruch 1, wobei mindestens ein Positionierungselement (74) an dem Anschlussende (702) des Betätigungselements (70) angeordnet ist; wobei der Auslassanschluss (182) des Ventilkörpers (12) einen Verbindungsdurchgang (222) aufweist; wobei eine Innenwand des Verbindungsdurchgangs (222) eine ringförmige Nut (222a) hat; wobei ein Endabschnitt des Auslassanschlusses (182) mindestens eine Aussparung (182a) hat, welche mit der ringförmigen Nut (222a) in Verbindung steht; wobei das mindestens eine Positionierungselement (74) über die mindestens eine Aussparung (182a) in die ringförmige Nut (222a) eintritt.

6. Druckregulierungsvorrichtung (1) gemäß Anspruch 5, wobei das Stöpselelement (44) ein erstes Ende (442) und ein zweites Ende (444) hat, welches entgegengesetzt zu dem ersten Ende (442) in einer axialen Richtung des Stöpselelements (44) ist; wobei das axiale Loch (46) eine offene Seite (462), welche an dem ersten Ende (442) gebildet ist, und eine geschlossene Seite (464) hat, welche sich zwischen dem ersten Ende (442) und dem zweiten Ende (444) befindet; wobei das erste Ende (442) mindestens eine Kerbe (442a) hat; wobei die ringförmige Nut (222a) einen radialen Umfangsbereich der mindestens einen Kerbe (442a) umgibt; wobei, wenn sich das Stöpselelement (44) an der ersten Position (P1) befindet, das mindestens eine Positionierungselement (74) über die mindestens eine Aussparung (182a) in die mindestens eine Kerbe (442a) eintritt und angepasst ist, um das Stöpselelement (44) anzutreiben, um sich entlang der axialen Richtung des Stöpselelements (44) zu der zweiten Position (P2) zu drehen.

7. Druckregulierungsvorrichtung (1) gemäß Anspruch 6, wobei das mindestens eine Positionierungselement (74) in einer radialen Richtung des Verbindungsendes (702) angeordnet ist und ein äußeres Ende (742), welches aus einem radialen Umfangsbereich des Verbindungsendes (702) hervorsteht, und ein inneres Ende (744) hat, welches sich in dem Gasdurchgang (72) befindet; wobei, wenn das Verbindungsende (702) mit dem Stöpselelement (44) verbunden ist, sich das erste Ende (442) des Stöpselelements (44) in dem Gasdurchgang (72) befindet, und das innere Ende (744) des mindestens einen Positionierungselements (74) in die mindestens eine Kerbe (442a) eintritt, und das äußere Ende (742) des mindestens einen Positionierungselements (74) in die ringförmige Nut (222a) eintritt.

8. Druckregulierungsvorrichtung (1) gemäß Anspruch 7, wobei ein Dichtungselement (76) in dem Gasdurchgang (72) angeordnet ist und ein Durchgangsloch (762) hat, welches mit dem Gasdurchgang (72) in Verbindung steht; wobei, wenn das Verbindungsende (702) mit dem Stöpselelement (44) verbunden ist, das erste Ende (442) des Stöpselelements (44) an dem Dichtungselement (76) anliegt, und die offene Seite (462) des axialen Lochs (46) mit dem Durchgangsloch (762) in Verbindung steht.

9. Druckregulierungsvorrichtung (1) gemäß Anspruch 6, wobei, wenn das mindestens eine Positionierungselement (74) das Stöpselelement (44) antreibt, um sich zu der zweiten Position (P2) entlang der axialen Richtung des Stöpselelements (44) zu drehen, eine Nut-Wand (222b) der ringförmigen Nut (222a) das mindestens eine Positionierungselement (74) in der ringförmigen Nut (222a) beschränkt.

10. Druckregulierungsvorrichtung (1) gemäß Anspruch 5, wobei der Auslassabschnitt (18) ein Aufnahmeloch (20) hat; wobei das Aufnahmeloch (20) einen ersten Abschnitt (22), einen zweiten Abschnitt (24) und einen dritten Abschnitt (26) hat; wobei der erste Abschnitt (22) den Verbindungsdurchgang (222) hat; wobei sich der zweite Abschnitt (24) zwischen dem ersten Abschnitt (22) und dem dritten Abschnitt (26) befindet; wobei eine Lochwand des zweiten Abschnitts (24) eine verjüngte Form hat und die Aufnahmekammer bildet, und ein Durchmesser des zweiten Abschnitts (24) in einer Richtung von dem ersten Abschnitt (22) aus hin zu dem dritten Abschnitt (26) sukzessive abnimmt; wobei eine Verbindung zwischen dem dritten Abschnitt (26) und dem zweiten Abschnitt (24) einen Schulterabschnitt (262) hat; wobei das Stöpselelement (44) einen verjüngten Abschnitt (52) und einen Erstreckungsabschnitt (54) aufweist; wobei eine Außenumfangsfläche des verjüngten Abschnitts (52) mit der Lochwand des zweiten Abschnitts (24) abgestimmt ist; wobei sich das Durchgangsloch (48) an dem verjüngten Abschnitt (52) befindet; wobei der Erstreckungsabschnitt (54) mit dem verjüngten Abschnitt (52) verbunden ist und sich an dem dritten Abschnitt (26) des Aufnahmelochs (20) befindet; wobei die Schaltbaugruppe (42) ein elastisches Element (56) aufweist; wobei ein Ende des elastischen Elements (56) an dem Schulterabschnitt (262) anliegt, während ein anderes Ende des elastischen Elements (56) eine Kraft auf den Erstreckungsabschnitt (54) in einer Richtung weg von dem Schulterabschnitt (262) ausübt, so dass die Außenumfangsfläche des verjüngten Abschnitts (52) an der Lochwand des zweiten Abschnitts (24) anliegt.

11. Druckregulierungsvorrichtung (1) gemäß Anspruch 10, wobei die Schaltbaugruppe (42) ein Blockierelement aufweist, welches an dem Erstreckungsabschnitt (54) des Stöpselelements (44) angeordnet ist; wobei das andere Ende des elastischen Elements (56) an dem Blockierelement anliegt.

12. Druckregulierungsvorrichtung (1) gemäß Anspruch 11, wobei das elastische Element (56) zwei Blockierplatten (562) und eine Feder (564) aufweist; wobei die zwei Blockierplatten (562) um den Erstreckungsabschnitt (54) herum passen, und eine von den Blockierplatten (562) an dem Schulterabschnitt (262) anliegt, während die andere Blockierplatte (562) an dem Blockierelement anliegt; wobei die Feder (564) um den Erstreckungsabschnitt (54) herum passt und sich zwischen den zwei Blockierplatten (562) befindet.

13. Druckregulierungsvorrichtung (1) gemäß Anspruch 11, wobei der Auslassabschnitt (18) des Ventilkörpers (12) eine Begrenzungsnut (28) hat, welche mit dem dritten Abschnitt (26) des Aufnahmelochs (20) in Verbindung steht; wobei die Begrenzungsnut (28) einen ersten Blockierabschnitt (282) und einen zweiten Blockierabschnitt (284) hat; wobei das Blockierelement in die Begrenzungsnut (28) eintritt; wobei, wenn das Stöpselelement (44) zu der ersten Position (P1) gedreht wird, das Blockierelement an dem ersten Blockierabschnitt (282) anliegt; wobei, wenn das Stöpselelement (44) zu der zweiten Position (P2) gedreht wird, das Blockierelement an dem zweiten Blockierabschnitt (284) anliegt.

## Revendications

1. Dispositif de régulation de pression (1), adapté pour être connecté à une ouverture de sortie (100a) d'un réservoir de gaz portable (100), comprenant :
un stabilisateur de pression (10) comprenant un corps de vanne (12), un ensemble de régulation de pression (32), et un ensemble de commutation (42), dans lequel le corps de vanne (12) a une partie d'entrée (14), une chambre de décompression (16), et une partie de sortie (18) ; la partie d'entrée (14) a un orifice d'entrée (142) adapté pour être connecté à l'ouverture de sortie (100a) du réservoir de gaz portable (100) ; la chambre de décompression (16) communique avec la partie d'entrée (14) ; la partie de sortie (18) communique avec la chambre de décompression (16) ; la partie de sortie (18) comporte un orifice de sortie (182) ; l'ensemble de régulation de pression (32) est disposé dans la chambre de décompression (16) et est adapté pour réguler une pression d'un gaz émis par le réservoir de gaz portable (100) pour former un gaz de sortie avec une pression prédéterminée ; l'ensemble de commutation (42) est disposé dans la partie de sortie (18), et est situé entre la chambre de décompression (16) et l'orifice de sortie (182), et est manipulable pour bloquer ou ouvrir le gaz de sortie,
**caractérisé en ce que** la partie de sortie (18) a une chambre de réception ; une paroi de la chambre de réception a une ouverture latérale (242) communiquant avec la chambre de décompression (16) ; l'ensemble de commutation (42) comprend un élément de bouchon (44) situé dans la chambre de réception ; l'élément de bouchon (44) a un trou traversant (48) situé dans une direction radiale de l'élément de bouchon (44) et un trou axial (46) communiquant avec le trou traversant (48) et l'orifice de sortie (182) ; l'élément de bouchon (44) peut être tourné entre une première position (P1) et une deuxième position (P2) dans une direction axiale de l'élément de bouchon (44) ; lorsque l'élément de bouchon (44) est dans la première position (P1), une surface périphérique extérieure de l'élément de bouchon (44) ferme l'ouverture latérale (242) ; lorsque l'élément de bouchon (44) est dans la deuxième position (P2), le trou traversant (48) communique avec l'ouverture latérale (242) ; un élément de manipulation (70) a une extrémité de connexion (702) et comporte un passage de gaz (72) à son intérieur ; une extrémité du passage de gaz (72) forme une entrée (722) à l'extrémité de connexion (702), et une autre extrémité du passage de gaz (72) est adaptée pour communiquer avec un tuyau de gaz (200) ; l'organe de manipulation (70) est relié de manière amovible à l'orifice de sortie (182) via l'extrémité de connexion (702) ; l'extrémité de connexion (702) est reliée à l'élément de bouchon (44), et le passage de gaz (72) communique avec le trou axial (46) ; l'élément de manipulation (70) entraîne l'élément de bouchon (44) à tourner entre la première position (P1) et la deuxième position (P2).

2. Dispositif de régulation de pression (1) selon la revendication 1, comprenant en outre un boîtier (60) et un couvercle (62), dans lequel le boîtier (60) est adaptée pour recevoir le réservoir de gaz portable (100) et présente une ouverture supérieure (602) ; le couvercle (62) est en prise de manière amovible avec le boîtier (60) et ferme l'ouverture supérieure (602), et possède un espace de réception et une première ouverture (642) communiquant avec l'espace de réception ; le stabilisateur de pression (10) est disposé dans l'espace de réception du couvercle (62) ; un emplacement de l'orifice de sortie (182) correspond à la première ouverture (642).

3. Dispositif de régulation de pression (1) selon la revendication 2, comprenant en outre un élément d'accrochage (68) relié au couvercle (62).

4. Dispositif de régulation de pression (1) selon la revendication 2, dans lequel la partie d'entrée (14) présente un passage d'entrée (144) s'étendant dans une direction axiale de la partie d'entrée (14) ; une extrémité du passage d'entrée (144) communique avec l'orifice d'entrée (142) ; un manomètre (65) est en prise avec la partie d'entrée (14) du corps de vanne (12) et communique avec une autre extrémité du passage d'entrée (144) ; le couvercle (62) présente une deuxième ouverture (644) communiquant avec l'espace de réception, et le manomètre (65) est situé dans la deuxième ouverture (644).

5. Dispositif de régulation de pression (1) selon la revendication 1, dans lequel au moins un élément de positionnement (74) est disposé sur l'extrémité de connexion (702) de l'élément de manipulation (70) ; l'orifice de sortie (182) du corps de vanne (12) présente un passage de connexion (222) ; une paroi intérieure du passage de connexion (222) présente une rainure annulaire (222a) ; une partie extrémité de l'orifice de sortie (182) présente au moins un renfoncement (182a) communiquant avec la rainure annulaire (222a) ; l'au moins un élément de positionnement (74) entre dans la rainure annulaire (222a) via ledit au moins un renfoncement (182a).

6. Dispositif de régulation de pression (1) selon la revendication 5, dans lequel l'élément de bouchon (44) présente une première extrémité (442) et une deuxième extrémité (444) opposée à la première extrémité (442) dans une direction axiale de l'élément de bouchon (44) ; le trou axial (46) présente un côté ouvert (462) formé au niveau de la première extrémité (442) et un côté fermé (464) situé entre la première extrémité (442) et la deuxième extrémité (444) ; la première extrémité (442) présente au moins une encoche (442a) ; la rainure annulaire (222a) entoure une périphérie radiale de l'au moins une encoche (442a) ; lorsque l'élément de bouchon (44) est situé dans la première position (P1), l'au moins un élément de positionnement (74) entre dans l'au moins une encoche (442a) via l'au moins un renfoncement (182a) et est adapté pour entraîner l'élément de bouchon (44) à tourner vers la deuxième position (P2) le long de la direction axiale de l'élément de bouchon (44).

7. Dispositif de régulation de pression (1) selon la revendication 6, dans lequel ledit au moins un élément de positionnement (74) est disposé dans une direction radiale de l'extrémité de connexion (702) et présente une extrémité extérieure (742) faisant saillie hors d'une périphérie radiale de l'extrémité de connexion (702) et une extrémité intérieure (744) située dans le passage de gaz (72) ; lorsque l'extrémité de connexion (702) est connectée à l'élément de bouchon (44), la première extrémité (442) de l'élément de bouchon (44) est située dans le passage de gaz (72), et l'extrémité intérieure (744) de l'au moins un élément de positionnement (74) entre dans l'au moins une encoche (442a), et l'extrémité extérieure (742) de l'au moins un élément de positionnement (74) entre dans la rainure annulaire (222a).

8. Dispositif de régulation de pression (1) selon la revendication 7, dans lequel un élément d'étanchéité (76) est disposé dans le passage de gaz (72) et présente un trou traversant (762) communiquant avec le passage de gaz (72) ; lorsque l'extrémité de connexion (702) est connectée à l'élément de bouchon (44), la première extrémité (442) de l'élément de bouchon (44) vient en butée contre l'élément d'étanchéité (76), et le côté ouvert (462) du trou axial (46) communique avec le trou traversant (762).

9. Dispositif de régulation de pression (1) selon la revendication 6, dans lequel, lorsque ledit au moins un élément de positionnement (74) entraîne l'élément de bouchon (44) pour tourner vers la deuxième position (P2) le long de la direction axiale de l'élément de bouchon (44), une paroi de rainure (222b) de la rainure annulaire (222a) restreint ledit au moins un élément de positionnement (74) dans la rainure annulaire (222a).

10. Dispositif de régulation de pression (1) selon la revendication 5, dans lequel la partie de sortie (18) comporte un trou de réception (20) ; le trou de réception (20) comporte une première section (22), une deuxième section (24) et une troisième section (26) ; la première section (22) comporte le passage de connexion (222) ; la deuxième section (24) est située entre la première section (22) et la troisième section (26) ; une paroi de trou de la deuxième section (24) est de forme conique et forme la chambre de réception, et un diamètre de la deuxième section (24) diminue progressivement dans une direction allant de la première section (22) à la troisième section (26) ; une jonction entre la troisième section (26) et la deuxième section (24) présente une partie d'épaulement (262) ; l'élément de bouchon (44) comprend une section conique (52) et une section d'extension (54) ; une surface périphérique extérieure de la section conique (52) correspond à la paroi de trou de la deuxième section (24) ; le trou traversant (48) est situé sur la section conique (52) ; la section d'extension (54) est reliée à la section conique (52) et est située au niveau de la troisième section (26) du trou de réception (20) ; l'ensemble de commutation (42) comprend un élément élastique (56) ; une extrémité de l'élément élastique (56) vient en butée contre la partie d'épaulement (262), tandis qu'une autre extrémité de l'élément élastique (56) exerce une force sur la section d'extension (54) dans une direction partant de la partie d'épaulement (262), de sorte que la surface périphérique extérieure de la section conique (52) vient en butée contre la paroi de trou de la deuxième section (24).

11. Dispositif de régulation de pression (1) selon la revendication 10, dans lequel l'ensemble de commutation (42) comprend un élément de blocage disposé au niveau de la section d'extension (54) de l'élément de bouchon (44) ; l'autre extrémité de l'élément élastique (56) vient en butée contre l'élément de blocage.

12. Dispositif de régulation de pression (1) selon la revendication 11, dans lequel l'élément élastique (56) comprend deux plaques de blocage (562) et un ressort (564) ; les deux plaques de blocage (562) s'adaptent autour de la section d'extension (54), et l'une des plaques de blocage (562) vient en butée contre la partie d'épaulement (262), tandis que l'autre plaque de blocage (562) vient en butée contre l'élément de blocage ; le ressort (564) s'adapte autour de la section d'extension (54) et est situé entre les deux plaques de blocage (562).

13. Dispositif de régulation de pression (1) selon la revendication 11, dans lequel la partie de sortie (18) du corps de vanne (12) présente une rainure de restriction (28) communiquant avec la troisième section (26) du trou de réception (20) ; la rainure de restriction (28) présente une première partie de blocage (282) et une deuxième partie de blocage (284) ; l'élément de blocage entre dans la rainure de restriction (28) ; lorsque l'élément de bouchon (44) est tourné vers la première position (P1), l'élément de blocage vient en butée contre la première partie de blocage (282) ; lorsque l'élément de bouchon (44) est tourné vers la deuxième position (P2), l'élément de blocage vient en butée contre la deuxième partie de blocage (284).
